# EUROPEAN PATENT SPECIFICATION

(11) **EP 4 524 065 B1**
(45) Date of publication and mention of the grant of the patent: **04.03.2026**
(21) Application number: 23879113.1
(22) Date of filing: 17.10.2023
(51) Int. Cl.: B65G 21/14, B65G 15/14, B65G 23/22, B65G 39/10, G07F 7/06

(54) **MULTIFUNCTIONAL CONVEYING DEVICE**
MULTIFUNKTIONALE FÖRDERVORRICHTUNG
DISPOSITIF DE TRANSPORT MULTIFONCTIONNEL

(30) Priority: 19.10.2022 CN 202222756964 U
(43) Date of publication of application: 19.03.2025
(73) Proprietor: Tomra Recycling Technology (Xiamen) Co., Ltd., Xiamen, Fujian 361006 (CN)
(72) Inventor: HE, Chunjian, Xiamen, Fujian 361006 (CN); ZHU, Yongyang, Xiamen, Fujian 361006 (CN)
(74) Representative: Chung, Hoi Kan
(86) International application number: PCT/CN2023/124993
(87) International publication number: WO 2024/083125

(56) References cited:
- CA-A- 1 128 891
- CN-A- 106 081 541
- CN-U- 205 187 211
- CN-U- 216 637 816
- CN-U- 216 637 816
- CN-U- 218 859 437
- CN-U- 86 202 443
- CN-U- 86 202 443
- CN-Y- 2 186 732
- CN-Y- 2 755 047
- DE-U1- 202013 012 757

## Description

### TECHNICAL FIELD

The invention relates to the technical field of transport equipment, in particular to a multifunctional conveying device.

### BACKGROUND

Conveying mechanisms are widely used in reverse vending machines to convey bottles forward or convey bottles backward, and serve as the background in recognition chambers of the reverse vending machines. CN216637816U discloses a conveying device according to the preamble of claim 1.

### SUMMARY

### Technical problem

When a reverse vending machine is used, a conveying mechanism in prolonged contact with bottles gets dirty easily. Therefore, the conveying mechanism needs to be cleaned and maintained regularly, or else its recognition accuracy and user experience will be affected. If a belt of the conveying mechanism fails, the belt needs to be replaced. However, the commonly used conveying mechanisms on the market currently are complex in structure and inconvenient to disassemble and assemble, such as a beverage bottle conveying device with publication number CN216637816U, its driving and driven wheel assemblies are mounted by an integrated support, and in operation, the driving wheels have greater and faster wear than the driven wheels, so the frequency of maintenance required for the driving wheels is significantly higher than that for the driven wheels. Because the supports for the driving and driven wheels at present are integrated, whether a driving wheel or a driven wheel is maintained requires disassembling an entire large support, which increases the difficulty and complexity of maintenance. In addition, because the conveying device is V-shaped, transmission by a cross universal shaft, on the one hand, results in a complex structure and difficult maintenance, and on the other hand, produces some transmission errors in the presence of angles.

### Technical solution:

To solve the above problems, the invention provides a multifunctional conveying device according to claim 1, which simplifies the structure by means of a flexible axle for transmission, and facilitates separate maintenance of driving wheels and driven wheels by transforming the integrated support into independent driving wheel supports and driven wheel supports.

The multifunctional conveying device according to the invention includes a V-shaped main frame, one conveyor belt is provided on a left portion and a right portion of the main frame respectively, and driven wheels of the two conveyor belts are mounted at one end of the main frame; driving wheels of the two conveyor belts are mounted at the other end of the main frame and driven by a driving mechanism, driving wheel supports are provided on two sides of the end of the main frame where the driving wheels are mounted, driven wheel supports are provided at the end of the main frame where the driven wheels are mounted, the driven wheels are mounted on the main frame by the driven wheel supports, the driving wheels are mounted on the main frame by the cooperation of the driving wheel supports and the main frame, and the two driving wheels are in transmission connection by a flexible axle.

Preferably, driving wheel support connecting portions are symmetrically provided on two sides of the end of the main frame away from the driven wheels, and the driving wheel supports are mounted on the main frame by the driving wheel support connecting portions.

Preferably, the driving wheel support connecting portion is provided with a connecting groove, the driving wheel support includes a driving mechanism mounting seat, wherein a connecting protrusion protrudes from one end of the driving mechanism mounting seat, and the connecting protrusion penetrates into the connecting groove; and the driving mechanism is fixed on the driving mechanism mounting seat of one of the driving wheel supports.

Preferably, metal sections are provided at two ends of the flexible axle, the metal sections are inserted into axle holes of the two driving wheels respectively, and the metal section are inserted at one end passes through the corresponding driving wheel and is connected to an output shaft of the driving mechanism.

Preferably, a peripheral surface of the metal section is hexagonal, and a cross-section of the axle hole of the driving wheel is also hexagonal and matches the peripheral surface of the metal section.

Preferably, a shaft connecting hole is formed at an end, connected to the output shaft of the driving mechanism, of the metal section, and a set screw is provided on a side wall.

Preferably, the driven wheel support includes first driven wheel connecting blocks and a second driven wheel connecting block; the second driven wheel connecting block is arranged at a bend of the end of the main frame where the driven wheels are connected; one first driven wheel connecting block is arranged on each on the two sides of the end of the main frame where the driven wheels are connected; and the driven wheel is mounted between the first driven wheel connecting block and the second driven wheel connecting block.

Preferably, a cross-section of the first driven wheel connecting block is U-shaped, and connecting holes are symmetrically formed on two side walls of the U-shape; the structure of the second driven wheel connecting block is formed by joining the two first driven wheel connecting blocks side by side; a guide rod on one side of the driven wheel is inserted into the connecting hole of the first driven wheel connecting block, and a guide rod on the other side of the driven wheel is inserted into the connecting hole of the second driven wheel connecting block.

Preferably, a tension spring is provided over the guide rod of the driven wheel. Beneficial effects:

Beneficial effects of the invention are as follows:
Compared with the prior art, the multifunctional conveying device according to the invention has at least the following technical effects: a cross universal shaft is replaced with the flexible axle manufactured from hexagonal metal sections and a metal flexible axle, which simplifies the overall assembly and synchronizes the transmission speeds of the left and right wheels. By transforming an existing integrated support into the driving wheel supports and the driven wheel supports mounted separately, the driving wheels can be maintained separately without overall disassembly, which facilitates maintenance by maintenance personnel and effectively reduces work intensity. The driven wheels are mounted separately at the front end of the main frame by means of the first driven wheel connecting blocks and the second driven wheel connecting block, so that the driven wheels can be maintained separately, which facilitates maintenance by maintenance personnel and improves the efficiency of maintenance.

### BRIEF DESCRIPTION OF THE DRAWINGS

FIG. 1 is a schematic structural diagram of an improved multifunctional conveying device of the invention.
FIG. 2 is a cross-sectional view taken along line A-A in FIG. 1.
FIG. 3 is a cross-sectional view taken along line B-B in FIG. 1.
FIG. 4 is a partially enlarged view of part C in FIG. 3.
FIG. 5 is a schematic diagram of component decomposition of the improved multifunctional conveying device of the invention.
FIG. 6 is a bottom view of the improved multifunctional conveying device of the invention.

Reference numerals: 1 - main fame, 11 - connecting groove, 2 - conveyor belt, 21 - driven wheel, 22 - driving wheel, 3 - driving mechanism, 4 - driven wheel support, 41 - first driven wheel connecting block, 42 - second driven wheel connecting block, 43 - guide rod, 44 - tension spring, 5 - flexible axle, 51 - metal section, 6 - driving wheel support, 61 - connecting protrusion, 62 - driving mechanism mounting seat.

### DETAILED DESCRIPTION

Further explanation of the invention will be provided below in conjunction with the accompanying drawings and specific embodiments.

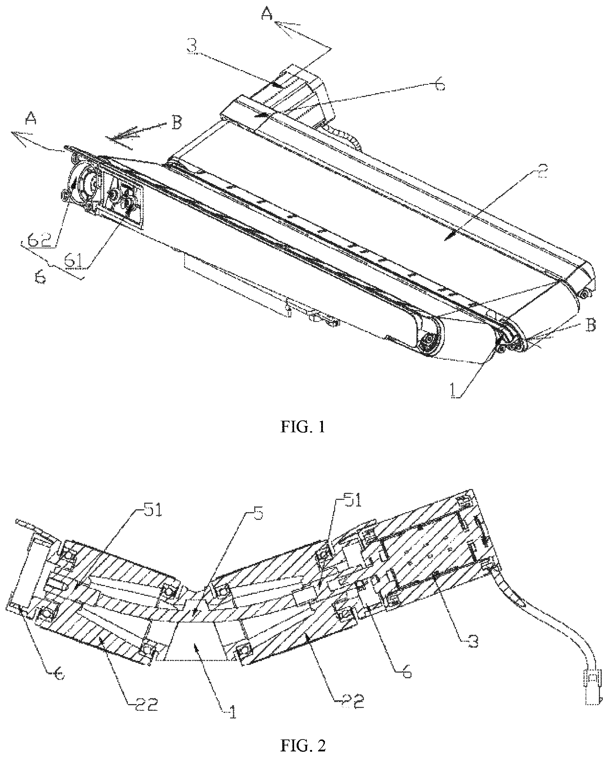

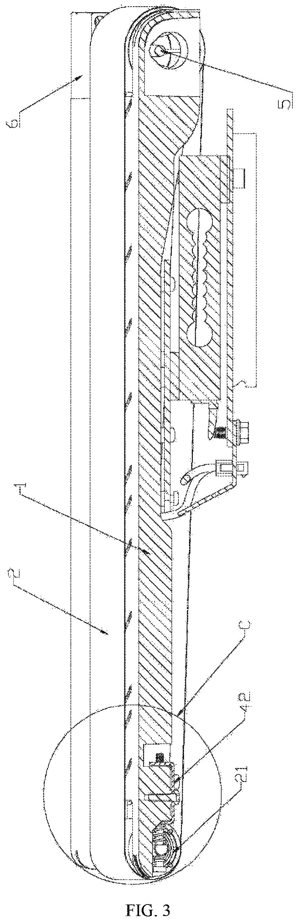

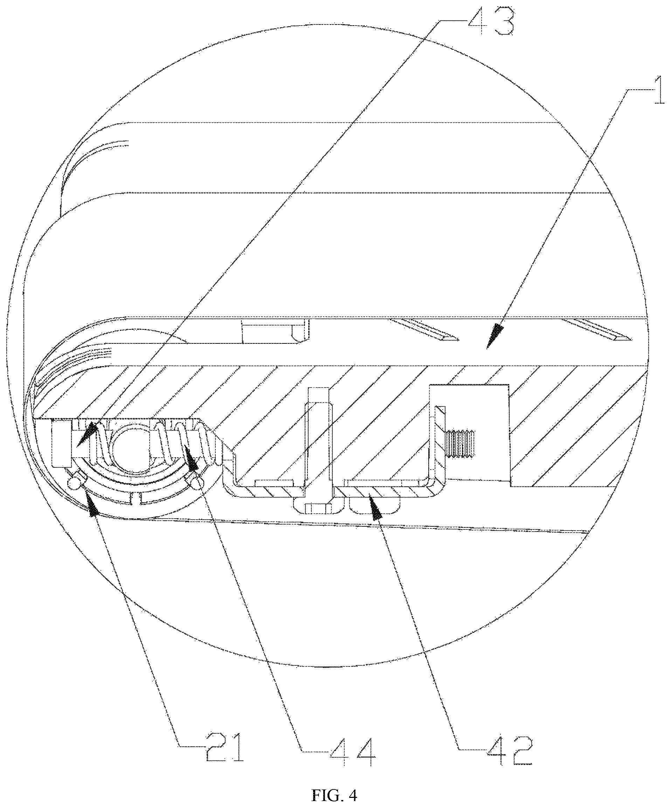

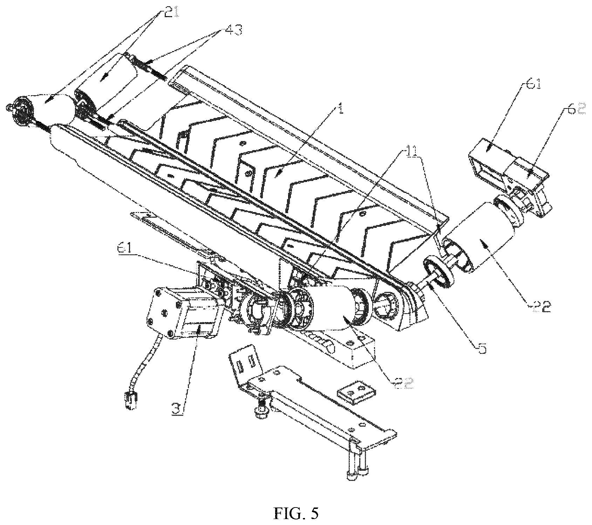

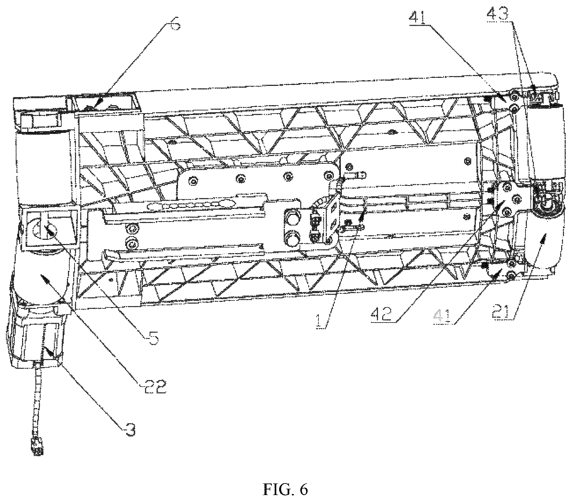

With reference to FIGs. 1 to 6, an improved multifunctional conveying device includes a V-shaped main frame 1, one conveyor belt 2 is provided on a left portion and a right portion of the main frame 1 respectively, and driven wheels 21 of the two conveyor belts 2 are mounted at one end of the main frame 1; driving wheels 22 of the two conveyor belts 2 are mounted at the other end of the main frame 1 and are driven by a driving mechanism 3, driving wheel supports are provided on two sides of the end of the main frame where the driving wheels are mounted, driven wheel supports are provided at the end of the main frame where the driven wheels are mounted, the driven wheels 21 are mounted on the main frame 1 by the driven wheel supports 4, the driving wheels 22 are mounted on the main frame 1 by the cooperation of the driving wheel supports 6 and the main frame, and the two driving wheels 22 are in transmission connection by a flexible axle 5. The flexible axle 5 replaces a cross universal joint to simplify the transmission structure and greatly simplify subsequent disassembly and maintenance processes. The structure in which the driving wheel supports 6 and the driven wheel supports 4 are mounted on the main frame respectively facilitates separate disassembly and maintenance of the driving wheels 22 and the driven wheels 21, and also facilitates the adjustment on the tension of the conveyor belts 2.

With reference to FIGs. 1 to 6, preferably, driving wheel support connecting portions are symmetrically provided on two sides of the end of the main frame 1 away from the driven wheels 21, and the driving wheel supports 6 are mounted on the main frame 1 by the driving wheel support connecting portions. The driving wheel support connecting portion is provided with a connecting groove 11, the driving wheel support 6 includes a driving mechanism mounting seat 62, wherein a connecting protrusion 61 protrudes from one end of the driving mechanism mounting seat 62, and the connecting protrusion 61 penetrates into the connecting groove 11; a driving motor of the driving mechanism 3 is fixed on the driving mechanism mounting seat 62 of one of the driving wheel supports 6, which facilitates disassembly and assembly of the driving wheel supports 6 and the driven wheel supports 4 to disassemble and maintain the driving wheels 22 and the driven wheels 21 separately.

With reference to FIGs. 1 to 6, preferably, metal sections 51 are provided at two ends of the flexible axle 5, the metal sections 51 insert into axle holes of the two driving wheels 22 respectively, and the metal section 51 at one end passes through the corresponding driving wheel 22 and is connected to an output shaft of the driving mechanism 3. The flexible axle 5 is used to replace the transmission of a conventional cross universal joint and replace rotating shafts of the two driving wheels 22, so that the structures of transmission portions of the driving wheels 22 are greatly simplified to reduce the probability of failure. A peripheral surface of the metal section 51 is hexagonal, and a cross-section of the axle hole of the driving wheel 22 is also hexagonal and matches the peripheral surface of the metal section 51 to facilitate accurate transmission, so that the driving wheels 22 of the two conveyor belts rotate synchronously. A shaft connecting hole is formed at an end, connected to the output shaft of the driving mechanism 3, of the metal section 51, and a set screw is provided on a side wall to ensure stable transmission.

With reference to FIGs. 1, 3, 4, and 6, preferably, the driven wheel support 4 includes first driven wheel connecting blocks 41 and a second driven wheel connecting block 42; the second driven wheel connecting block 42 is arranged at a bend of the end of the main frame 1 where the driven wheels 21 are connected; one first driven wheel connecting block 41 is arranged on each of the two sides of the end of the main frame 1 where the driven wheels 21 are connected; and the driven wheel 21 is mounted between the first driven wheel connecting block 41 and the second driven wheel connecting block 42. A cross-section of the first driven wheel connecting block 41 is U-shaped, and connecting holes are symmetrically formed on two side walls of the U-shape; the structure of the second driven wheel connecting block 42 is formed by joining the two first driven wheel connecting blocks 41 side by side, may be integrated or split, and has a width more than twice that of the first driven wheel connecting block 41 for forming more than twice connecting holes to facilitate assembly of guide rods 43 of the two driven wheels 21, that is, two guide rods 43; the guide rod 43 on one side of the driven wheel 21 is inserted into the connecting hole of the first driven wheel connecting block 41, and the guide rod 43 on the other side of the driven wheel 21 is inserted into the connecting hole of the second driven wheel connecting block 42,to independently mount the driven wheel 21 between the main frame 1 and the driven wheel support 4, so as to facilitate separate disassembly and maintenance of the driven wheel 21.

With reference to FIGs. 1, 3, 4, and 6, preferably, a tension spring 44 is provided over the guide rod 43 of the driven wheel 21, so that the driven wheel 21 can slide along the guide rod 43 within a certain range to adjust the force acting on the driven wheel 21 and avoid excessive force. Meanwhile, during disassembly and assembly, the tension spring can be pressed towards a middle portion of the main frame 1 to facilitate the removal of the conveyor belt 2 from the driving wheel 22 and the driven wheel 21, so that the conveyor belt 2 is not tensioned any more to facilitate the cleaning and maintenance of the conveyor belt 2. When the driven wheel 21 is not pressed, the driven wheel is automatically reset under the force of the tension spring 44, and the conveyor belt 2 can be re-tensioned. When pressing the driven wheel 21, the tension spring also facilitates easy mounting of the conveyor belt 2.

The conveying device according to the invention has the following working principle:

The flexible axle 5 replaces an existing cross universal shaft to achieve nonlinear transmission between the two driving wheels 22, and also replaces rotating shafts of the two driving wheels 22. By using one flexible axle 5 instead of three components, the conveying mechanism is greatly simplified, the probability of occurrence of possible problems in subsequent use is greatly reduced, and even if maintenance is required, the difficulty in maintenance is also reduced. An existing transmission support is replaced with the driving wheel supports 6 and the driven wheel supports 4 mounted separately, and the driven wheels 21 are mounted separately by means of the first driven wheel connecting blocks 41 and the second driven wheel connecting block 42, so that the driving wheels 22 and the driven wheels 21 can be disassembled and maintained separately but are not necessarily dissembled as a whole, which reduces the difficulty in disassembly.

## Claims

1. A multifunctional conveying device, comprising a V-shaped main frame, wherein one conveyor belt is provided on a left portion and a right portion of the main frame respectively, and driven wheels of the two conveyor belts are mounted at one end of the main frame; driving wheels of the two conveyor belts are mounted at the other end of the main frame and are driven by a driving mechanism, wherein driving wheel supports are provided on two sides of the end of the main frame where the driving wheels are mounted, and driven wheel supports are provided at the end of the main frame where the driven wheels are mounted; the driven wheels are mounted on the main frame by the driven wheel supports, the driving wheels are mounted on the main frame by the cooperation of the driving wheel supports and the main frame, **characterised in that** the two driving wheels are in transmission connection by a flexible axle.

2. The multifunctional conveying device according to claim 1, wherein driving wheel support connecting portions are symmetrically provided on two sides of the end of the main frame away from the driven wheels, and the driving wheel supports are mounted on the main frame by the driving wheel support connecting portions.

3. The multifunctional conveying device according to claim 2, wherein the driving wheel support connecting portion is provided with a connecting groove, the driving wheel support comprises a driving mechanism mounting seat, wherein a connecting protrusion protrudes from one end of the driving mechanism mounting seat, and the connecting protrusion penetrates into the connecting groove; and the driving mechanism is fixed on the driving mechanism mounting seat of one of the driving wheel supports.

4. The multifunctional conveying device according to claim 1, wherein metal sections are provided at two ends of the flexible axle, the metal sections are inserted into axle holes of the two driving wheels respectively, and the metal section at one end passes through the corresponding driving wheel and is connected to an output shaft of the driving mechanism.

5. The multifunctional conveying device according to claim 4, wherein a peripheral surface of the metal section is hexagonal, and a cross-section of the axle hole of the driving wheel is also hexagonal and matches the peripheral surface of the metal section.

6. The multifunctional conveying device according to claim 4, wherein a shaft connecting hole is formed at an end, connected to the output shaft of the driving mechanism, of the metal section, and a set screw is provided on a side wall.

7. The multifunctional conveying device according to claim 1, wherein the driven wheel support comprises first driven wheel connecting blocks and a second driven wheel connecting block; the second driven wheel connecting block is arranged at a bend of the end of the main frame where the driven wheels are connected; one first driven wheel connecting block is arranged on each of the two sides of the end of the main frame where the driven wheels are connected; and the driven wheel is mounted between the first driven wheel connecting block and the second driven wheel connecting block.

8. The multifunctional conveying device according to claim 7, wherein a cross-section of the first driven wheel connecting block is U-shaped, and connecting holes are symmetrically formed on two side walls of the U-shape; the structure of the second driven wheel connecting block is formed by joining two of the first driven wheel connecting blocks side by side; a guide rod on one side of the driven wheel is inserted into the connecting hole of the first driven wheel connecting block, and a guide rod on the other side of the driven wheel is inserted into the connecting hole of the second driven wheel connecting block.

9. The multifunctional conveying device according to claim 8, wherein a tension spring is provided over the guide rod of the driven wheel.

## Patentansprüche

1. Multifunktionale Fördervorrichtung, umfassend einen V-förmigen Hauptrahmen, wobei jeweils ein Förderband an einem linken Abschnitt und einem rechten Abschnitt des Hauptrahmens vorgesehen ist und Abtriebsräder der beiden Förderbänder an einem Ende des Hauptrahmens montiert sind; Antriebsräder der beiden Förderbänder am anderen Ende des Hauptrahmens montiert sind und von einem Antriebsmechanismus angetrieben werden, wobei Antriebsradstützen an zwei Seiten des Endes des Hauptrahmens vorgesehen sind, an denen die Antriebsräder montiert sind, und Abtriebsradstützen am Ende des Hauptrahmens vorgesehen sind, wobei die Abtriebsräder montiert sind; die Abtriebsräder durch die Abtriebsradstützen am Hauptrahmen montiert sind, die Antriebsräder durch das Zusammenwirken der Antriebsradstützen und des Hauptrahmens am Hauptrahmen montiert sind, **dadurch gekennzeichnet, dass** die beiden Antriebsräder durch eine flexible Achse in Getriebeverbindung stehen.

2. Multifunktionale Fördervorrichtung nach Anspruch 1, wobei Antriebsradstützverbindungsabschnitte symmetrisch auf zwei Seiten des Endes des Hauptrahmens entfernt von den Abtriebsrädern vorgesehen sind und die Antriebsradstützen durch die Antriebsradstützverbindungsabschnitte am Hauptrahmen montiert sind.

3. Multifunktionale Fördervorrichtung nach Anspruch 2, wobei der Antriebsradstützverbindungsabschnitt mit einer Verbindungsnut versehen ist, der Antriebsradstütz einen Montagesitz für den Antriebsmechanismus umfasst, wobei ein Verbindungsvorsprung von einem Ende des Montagesitzes für den Antriebsmechanismus vorsteht und der Verbindungsvorsprung in die Verbindungsnut eindringt; und der Antriebsmechanismus auf dem Montagesitz für den Antriebsmechanismus einer der Antriebsradstützen befestigt ist.

4. Multifunktionale Fördervorrichtung nach Anspruch 1, wobei an beiden Enden der flexiblen Achse Metallabschnitte vorgesehen sind, die Metallabschnitte jeweils in Achsbohrungen der beiden Antriebsräder eingeführt sind und der Metallabschnitt an einem Ende durch das entsprechende Antriebsrad hindurchgeführt und mit einer Ausgangswelle des Antriebsmechanismus verbunden ist.

5. Multifunktionale Fördervorrichtung nach Anspruch 4, wobei eine Umfangsfläche des Metallabschnitts sechseckig ist und ein Querschnitt der Achsbohrung des Antriebsrads ebenfalls sechseckig ist und zur Umfangsfläche des Metallabschnitts passt.

6. Multifunktionale Fördervorrichtung nach Anspruch 4, wobei an einem Ende, das mit der Ausgangswelle des Antriebsmechanismus verbunden ist, des Metallabschnitts eine Wellenverbindungsbohrung ausgebildet ist und an einer Seitenwand eine Stellschraube vorgesehen ist.

7. Multifunktionale Fördervorrichtung nach Anspruch 1, wobei der Abtriebsradstütz erste Abtriebsrad-Verbindungsblöcke und einen zweiten Abtriebsrad-Verbindungsblock umfasst; der zweite Abtriebsrad-Verbindungsblock an einer Biegung des Endes des Hauptrahmens angeordnet ist, an denen die Abtriebsräder verbunden sind; ein erster Abtriebsrad-Verbindungsblock an jeder der beiden Seiten des Endes des Hauptrahmens angeordnet ist, an denen die Abtriebsräder verbunden sind; und das Abtriebsrad zwischen dem ersten Abtriebsrad-Verbindungsblock und dem zweiten Abtriebsrad-Verbindungsblock montiert ist.

8. Multifunktionale Fördervorrichtung nach Anspruch 7, wobei ein Querschnitt des ersten Abtriebsrad-Verbindungsblocks U-förmig ist und Verbindungslöcher symmetrisch an zwei Seitenwänden der U-Form ausgebildet sind; die Struktur des zweiten Abtriebsrad-Verbindungsblocks durch Aneinanderfügen von zwei der ersten Abtriebsrad-Verbindungsblöcke gebildet wird; eine Führungsstange auf einer Seite des Abtriebsrades in das Verbindungsloch des ersten Abtriebsrad-Verbindungsblocks eingeführt wird und eine Führungsstange auf der anderen Seite des Abtriebsrades in das Verbindungsloch des zweiten Abtriebsrad-Verbindungsblocks eingeführt wird.

9. Multifunktionale Fördervorrichtung nach Anspruch 8, wobei eine Zugfeder über der Führungsstange des Abtriebsrades vorgesehen ist.

## Revendications

1. Dispositif transporteur multifonction, comprenant un cadre principal en forme V, dans lequel une bande transporteuse est prévue sur une partie gauche et une partie droite du cadre principal respectivement, et des roues entraînées des deux bandes transporteuses sont montées à une extrémité du cadre principal ; des roues entraîneuses des deux bandes transporteuses sont montées à l'autre extrémité du cadre principal et entraînées par un mécanisme entraîneur, dans lequel des supports de roue entraîneuse sont prévus sur deux côtés de l'extrémité du cadre principal où sont montées les roues entraîneuses, et des supports de roue entraînée sont prévus à l'extrémité du cadre principal où sont montées les roues entraînées ; les roues entraînées sont montées sur le cadre principal par l'intermédiaire des supports de roue entraînée, les roues entraîneuses sont montées sur le cadre principal grâce à la coopération entre les supports de roue entraîneuse et le cadre principal, **caractérisé en ce que** les deux roues entraîneuses sont en connexion de transmission par un essieu flexible.

2. Dispositif transporteur multifonction selon la revendication 1, dans lequel des parties de connexion de support de roue entraîneuse sont prévues de manière symétrique sur deux côtés de l'extrémité du cadre principal éloignée des roues entraînées, et les supports de roue entraîneuse sont montés sur le cadre principal par l'intermédiaire des parties de connexion de support de roue entraîneuse.

3. Dispositif transporteur multifonction selon la revendication 2, dans lequel la partie de connexion de support de roue entraîneuse est pourvue d'une rainure de connexion, le support de roue entraîneuse comprend un siège de montage de mécanisme entraîneur, dans lequel une saillie de connexion fait saille d'une extrémité du siège de montage de mécanisme entraîneur, et la saillie de connexion pénètre jusqu'à l'intérieur de la rainure de connexion ; et le mécanisme entraîneur est fixé sur le siège de montage de mécanisme entraîneur de l'un des supports de roue entraîneuse.

4. Dispositif transporteur multifonction selon la revendication 1, dans lequel des sections métalliques sont prévues à deux extrémités de l'essieu flexible, les sections métalliques sont insérées dans des trous d'essieu des deux roues entraîneuses respectivement, et la section métallique à une extrémité passe à travers la roue entraîneuse correspondante et est connectée à un arbre de sortie du mécanisme entraîneur.

5. Dispositif transporteur multifonction selon la revendication 4, dans lequel une surface périphérique de la section métallique est hexagonale, et une section transversale du trou d'essieu de la roue entraîneuse est également hexagonale et correspond à la surface périphérique de la section métallique.

6. Dispositif transporteur multifonction selon la revendication 4, dans lequel un trou de connexion d'arbre est formé à une extrémité, connectée à l'arbre de sortie du mécanisme entraîneur, de la section métallique, et une vis de réglage est prévue sur une paroi latérale.

7. Dispositif transporteur multifonction selon la revendication 1, dans lequel le support de roue entraînée comprend des premiers blocs de connexion de roue entraînée et un second bloc de connexion de roue entraînée ; le second bloc de connexion de roue entraînée est disposé à un coude de l'extrémité du cadre principal où sont connectées les roues entraînées ; un premier bloc de connexion de roue entraînée est disposé sur chacun des deux côtés de l'extrémité du cadre principal où sont connectées les roues entraînées ; et la roue entraînée est montée entre le premier bloc de connexion de roue entraînée et le second bloc de connexion de roue entraînée.

8. Dispositif transporteur multifonction selon la revendication 7, dans lequel une section transversale du premier bloc de connexion de roue entraînée est en forme U, et des trous de connexion sont formés de manière symétrique sur les deux parois latérales de la forme U ; la structure du second bloc de connexion de roue entraînée est formée en joignant côte à côte deux des premiers blocs de connexion de roue entraînée ; une tige de guidage sur un côté de la roue entraînée est insérée dans le trou de connexion du premier bloc de connexion de roue entraînée, et une tige de guidage sur l'autre côté de la roue entraînée est insérée dans le trou de connexion du second bloc de connexion de roue entraînée.

9. Dispositif transporteur multifonction selon la revendication 8, dans lequel un ressort de tension est prévu au-dessus de la tige de guidage de la roue entraînée.
